(19) Europäisches Patentamt
European Patent Office
Office européen des brevets

(11) EP 1 865 299 B1

(12) **EUROPEAN PATENT SPECIFICATION**

(45) Date of publication and mention
of the grant of the patent:
**23.09.2009 Bulletin 2009/39**

(51) Int Cl.:
**G01J 11/00** (2006.01) **G01J 1/42** (2006.01)
**G01J 1/58** (2006.01)

(21) Application number: **06011634.0**

(22) Date of filing: **06.06.2006**

(54) **Method and device for fs laser pulse characterization**

Verfahren und Vorrichtung zur Charakterisierung von fs-Laserpulsen

Procédé et dispositif de caractérisation d'impulsion laser fs

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**12.12.2007 Bulletin 2007/50**

(73) Proprietors:
- **Schröder, Hartmut**
  **80805 Munich (DE)**
- **Theberge, Francis**
  **Ste-Foy G1V 1B6 (CA)**
- **Sharifi Kalahroudi, Seyed Mehdi**
  **Quebec, G1V 3B6 (CA)**

(72) Inventors:
- **Schröder, Hartmut**
  **80805 Munich (DE)**
- **Theberge, Francis**
  **Ste-Foy G1V 1B6 (CA)**
- **Sharifi Kalahroudi, Seyed Mehdi**
  **Quebec, G1V 3B6 (CA)**

(74) Representative: **Heusler, Wolfgang**
**v. Bezold & Partner**
**Patentanwälte**
**Akademiestrasse 7**
**80799 München (DE)**

(56) References cited:
DE-A1- 19 926 812          JP-A- 2005 241 284
US-A1- 2002 024 015

- **BRADLEY D J ET AL: "ULTRASHORT PULSE MEASUREMENTS" PROC IEEE MAR 1974, vol. 62, no. 3, March 1974 (1974-03), pages 313-345, XP002437246**
- **LIU W ET AL: "Multiple refocusing of a femtosecond laser pulse in a dispersive liquid (methanol)" OPTICS COMMUNICATIONS, NORTH-HOLLAND PUBLISHING CO. AMSTERDAM, NL, vol. 225, no. 1-3, 15 September 2003 (2003-09-15), pages 193-209, XP004454995 ISSN: 0030-4018**
- **LAMMEL O ET AL: "Femtosecond pulse duration measurement by two-photon fluorescence detection" Optical and Quantum Electronics Kluwer Academic Publishers Netherlands, vol. 32, no. 10, October 2000 (2000-10), pages 1147-1160, XP002437247 ISSN: 0306-8919**

**Description**

Field of the Invention

The present invention relates to a method for laser pulse characterization, in particular for determining at least one pulse parameter of laser pulses, such as pulse duration or a chirp parameter. Furthermore, the present invention relates to a measuring device for laser pulse characterization, in particular for determining at least one of the above pulse parameters.

Background of the invention

Numerous applications of ultrashort femtosecond laser pulses (1 fs = $10^{-15}$ s) are generally known, ranging from nuclear physics to phototherapy. Practical all applications need some characterization and control of relevant laser parameters. The average laser power, the pulse energy, and the wavelength spectrum are relatively easy to measure. The measurement of dynamic parameters, determining the pulse intensity, such as pulse duration (temporal shape), chirp (frequency change across the pulse), and the beam profile (spatial shape) is much more involved. For this purpose an additional specialized and spacious optical set-up is required up to the present.

Although recent advances in ultrashort pulse measurement, conventional techniques are still complex, limited to a narrow range of laser wavelengths, and averaging across the beam profile.

In particular, the usually applied correlation methods of characterizing ultrashort laser pulses require to split and to recombine two pulses (or more) in a carefully aligned second-harmonic-generation (SHG) crystal. The typical method, autocorrelation, may neither be simple nor accurate because the recombination of the pulses involves carefully aligning and maintaining this alignment while scanning the delay between the two pulses. Moreover, for short laser pulses, the phase-matching-bandwidth condition mandates a thin (and expensive) SHG crystal, yielding a very weak signal and hence poor sensitivity. The measurement of the autocorrelation function would give only the pulse duration without information on the chirp.

More complex autocorrelation based system, namely FROG, replace the intensity measurement detector by a spectrometer (see D. Kane et al. "Single-shot measurement of the intensity and phase of a femtosecond laser pulse" in "Proc. SPIE" vol. 150, 1993, p. 1861) or a thick second harmonic crystal (see P. O'Shea et al. "Highly simplified device for ultrashort-pulse measurement" in "Opt. Lett." vol. 26, 2001, p. 932-934). The spectral intensity distribution of the generated second harmonic is analyzed as a function of the delay and through a complex algorithm, the phase and duration of the electric field from the laser pulse could be retrieved.

Another technique to measure the amplitude and the phase of ultrashort optical laser pulses is based on self-referencing interference of the laser beam (see C. Iaconis et al. "Spectral phase interferometry for direct electric-field reconstruction of ultrashort optical pulse" in "Opt. Lett." vol. 23, 1998, p. 792-794). This technique makes use of the spectral interferogram of the second harmonic signal generated by interference of two replicas of the pulse with a stretched pulse propagating in a nonlinear medium. However, the complexity of the setup needs careful and sensitive alignment of the laser beam and the temporal delay between the replicas.

D. J. Bradley et al. ("Proc. of the IEEE", vol. 62, no. 3, 1974, p. 313) and O. Lammel et al. ("Optical and Quantum Electronics", vol. 32, 2000, p. 1147) disclose classical approaches for the characterization of ultrashort pulses based on autocorrelation measurements. The laser pulse to be measured is split into partial pulses at a beam splitter, which partial pulses are overlapped in an optically non-linear medium. Overlapping of the partial pulses travelling with opposite directions through the optically non-linear medium results in an autocorrelation profile, which allows the determination of the pulsed duration. This technique, however, is applicable only as long as pulse lengthening due to the dispersion of the group velocity can be ignored. Practical pulse lengths are several picoseconds. Furthermore, this set-up needs two counter propagating pulses.

W. Liu et al.("Optics Communications", vol. 225, 2003, p. 193) disclose an optical set-up for investigating the interaction of single short laser pulses with a dispersive medium. The laser pulse travelling through a sample cell with a dispersive medium is detected for measuring a spatial pulse intensity distribution along the travelling direction. To this end, the fluorescence of a dye included in the dispersive medium is measured with a CCD camera. With the set-up of W. Liu et al. refocusing effects of the interaction of the laser pulse with the dispersive medium are investigated. Using the set-up for a characterization of the single short laser pulses is not disclosed.

Objective of the invention

The objective of the invention is to provide an improved and simplified method of laser pulse characterization avoiding the disadvantages of the conventional techniques. In particular, the laser pulse characterization method is to be capable to provide an accurate determination of the spatial distribution of the temporal pulse shape. The method should be applicable to a broad parameter range of laser wavelengths, laser pulse energies, and/or laser pulse durations. In particular, the device of the invention should have a simplified structure requiring reduced space, reduced alignment and reduced costs and allowing for straightforward raw data analysis.

Summary of the invention

The above objective is solved with a method or a device comprising the features of the independent claims. Advantageous embodiments of the invention are defined in the dependent claims.

According to a first aspect, the present invention is based on the general technical teaching of measuring at least one pulse parameter of laser pulses by non-linear imaging of the laser beam profile as the pulse is propagating in a dispersive medium. As a short laser pulse is composed of a plurality of frequencies, when the pulse is propagating through optical media, the group velocity dispersion makes it longer and its intensity changes. This deformation can be measured by any kind of non-linear responses, like e.g. two-photon fluorescence induced during the propagation of laser pulse in the dispersive medium. The utilization of a non-linear response is the all-dominant ingredient of the present invention, because the time-integrated response, e.g. fluorescence signal is inversely proportional to the local pulse duration. Contrarily, this information is masked for linear excitation processes. The inventors have found, that the deformation of the laser pulse while travelling through the dispersive medium can be used as a reliable and precise measure for the pulse parameters. According to the invention, at least one of the pulse parameters comprising pulse duration and chirp of the laser pulse is determined.

Non-linear imaging comprises sensing (measuring or visually monitoring) at least one pulse intensity distribution generated by a non-linear interaction of at least one laser pulse with an absorbing component. The absorbing component is arranged in or downstream of the dispersive medium. The absorbing component is provided with a homogeneous (uniform) distribution in the dispersive medium or across the beam path of the laser pulses to be investigated.

Typically, the non-linear interaction comprises a two-photon excitation of the absorbing component. Alternatively, a three photon excitation or higher order excitation can be used according to the invention. The term "pulse intensity distribution" refers to a distribution of light emitted as a result of the non-linear excitation (simultaneous excitation with two or more photons) of the absorbing component by the laser light. According to the invention, one or more pulse intensity distributions are sensed each representing a one- or two-dimensional pulse images of the electromagnetic field forming the laser pulse. Depending on the viewing direction relative to the propagation direction, already one single pulse image can be sufficient for a characterization of the laser pulse, e.g. in terms of pulse duration or chirp. Preferably, there is no or only a negligible linear interaction of the laser pulses with the absorbing component.

According to a second aspect, a measuring device for laser pulse characterization by a method according to the above first aspect comprises the features of claim 8.

Depending on the application of the invention and in particular depending on the material of the dispersive medium, the sensor device comprises an optical sensor device or an electrical photo current sensor device. The optical sensor device has particular advantages in terms of availability of high-sensitive measurement equipment, while the electrical photo current sensor device may have advantages due to a compact connection of the absorbing component and the sensor device and due to a preferred spectral response.

In a broad sense, the "characterization of the laser pulse" comprises a qualitative or quantitative determination of at least one of the above pulse parameters or further features of the laser pulse derived from the pulse parameters. The qualitative determination includes a visual monitoring of the pulse intensity distribution in the dispersive medium. As an example, the location of a maximum of the pulse intensity distribution yields an information regarding the chirp of the pulse to be analysed. The quantitative determination includes an analysis of the at least one pulse intensity distribution with a calculation of the at least one pulse parameter. The calculation includes a fitting procedure, wherein the pulse intensity distribution is modelled with a dispersed laser pulse represented by a single Gaussian profile or a sum of Gaussian profiles. For providing the quantitative determination, the measuring device of the invention further comprising an analysing device, such as a computer or other processing circuit for determining the at least one pulse parameter of the laser pulse.

Advantageously, the present invention yields an extremely efficient approach for relative or absolute characterizing of at least one of the spatial and temporal intensity distribution of a laser pulse. Hence it provides means of a complete pulse characterization. The following further advantages are obtained with the invention. Laser pulse lengths from sub-femtoseconds or femtoseconds (preferably from e.g. 3 fs) to about one picosecond can be characterized. Energies may be as low as few nJ per pulse. A large wavelength range from 150 nm up to 2 $\mu$m is accessible. High power and large diameter laser beams can be characterized. A single shot characterization of the laser pulse is provided, i. e. the propagating step comprises a travelling of one single laser pulse through the dispersive medium. Composite laser pulses can be fitted as a sum of Gaussian pulses with different initial parameters (fluence, pulse duration and chirp). The invention allows a simple alignment of the optical setup. A plurality of transparent media can be used as the dispersive medium. Low cost and standard optics only are needed. In terms of application of the laser pulses, the reliability and the precision of experiments using ultrashort laser pulses can be essentially increased.

Another advantage of the invention is given by the variability of the viewing direction relative to the propagation direction for obtaining the at least one spatial pulse intensity distribution. According to the invention, at least one side pulse intensity distribution is measured. In this case, the viewing direction for sensing the pulse intensity distribution deviates from the propagation direction of laser pulse. A particular advantage of sensing the side pulse intensity distribution is given by the fact, that a plurality of pulse parameters can be obtained from one pulse only. In terms of the analysis of the pulse image, a viewing direction perpendicular to the propagating direction is particularly preferred, as the side pulse intensity distribution parallel to the propagation direction of the laser pulse is obtained. The side pulse intensity distribution may comprise one- or two-dimensional data corresponding to a line-shaped or planar image.

For obtaining the side pulse intensity distribution, the optical sensor device is positioned laterally relative to the propagation direction of the laser pulse. Preferably, the optical sensor device is adapted for taking a complete image of the dispersive medium resulting in a side pulse intensity distribution, which can be directly fitted with laser pulse parameters.

According to a further preferred embodiment of the invention, a plurality of side pulse intensity distributions is measured each representing different longitudinal sections of the at least one laser pulse. Accordingly, one- or two-dimensional sections of a pulse profile of the laser pulse can be obtained. On the basis of these data, a complete three-dimensional (spatial) reconstruction of the laser pulse is possible.

According to the inventive device, a masking device is used for transmitting different longitudinal parts of a pulse profile of the laser pulse to the dispersive medium. The masking device is arranged on an input side (illuminated side) of the dispersive medium and comprises a transmission opening, such as a slit or a pinhole which can be moved (scanned) perpendicular to the propagation direction of the laser pulse. Accordingly, the position of the transmission opening can be varied for transmitting different longitudinal portions of the laser pulses and providing a plurality of different side pulse intensity distributions.

A further important advantage of the invention is given by the variability of selecting a material used as the dispersive medium. If a liquid solution of a chromophoric substance, e.g. a dye or pigment solution is used, advantages arise in terms of available and well-characterized fluorescing substances. Alternatively, a solid solution of a chromophoric substance, e.g. a dye homogeneously distributed in a solid polymer, can be used, which results in an advantageous compact optical setup. Furthermore, a doped crystal, a gas or a metal film can be used for providing particular non-linear interactions of the laser pulses with the absorbing component.

Further details and advantages of the invention are described in the following with reference to the attached drawings, which show in:

Figures 1A to 1D:      schematic illustrations of a first embodiment of the invention;

Figure 2A and 2B:      curve diagrams illustrating the determination of a laser pulse duration and a pulse chirp;

Figure 3:      curve diagrams illustrating the determination of a laser pulse profile;

Figure 4:      a schematic illustrations of a further embodiment of the invention;

Figure 5:      a schematic illustrations of a further technique (no embodiment of the invention); and

Figure 6:      further experimental results illustrating laser pulse profiles (no embodiment of the invention).

Firstly, the physical background of the invention is explained, followed by a description of preferred embodiments of the invention. Details of the generation of ultra-short laser pulses and guiding the laser pulses in an optical set-up as well as the physical background of the non-linear interaction of the laser pulses with an absorbing component are not described as far as they are known from prior art. With this regard, reference is made to textbooks of laser physics and fluorescence measurements.

Physical background

The minimum or band width limited pulse duration $t_p$ (full width at half maximum) of a laser pulse is limited by its spectral width $\Delta\omega$ (full width at half maximum). For a laser pulse with a Gaussian temporal profile

$$exp\left(-4\,ln(2)\frac{t^2}{t_0^2}\right),$$ the relation between the temporal and spectral width is given by $t_p \cdot \Delta\omega = 4ln(2)$. In the wavelength domain this relation transforms $t_p \cdot \Delta\lambda = \dfrac{2\,ln(2)\lambda^2}{\pi c}$ where c is the velocity of light (0,3 $\mu$m/fs). In the case of a linearly chirped pulse the incident pulse duration is given by $t_0 = t_p\sqrt{1+c^2}$ .

When a laser pulse propagates in an optical medium, the pulse duration will change because all frequencies travel with different speeds. Therefore and most importantly the intensity is thus reduced apart from a short transient rise for negatively chirped pulses. For the case that diffraction and the nonlinear propagation effects are negligible as compared to the dispersion effect (laser intensity preferably inferior to $10^{11}$W/cm$^2$), the pulse duration of the laser ($t_z$) as a function of distance z is given by:

$$t_z = t_0\sqrt{\left(1+c\frac{zk_2}{t_0^2}\right)^2 + \left(\frac{zk_2}{t_0^2}\right)^2} \qquad\qquad (1)$$

(where $k_2 = 4\,ln(2)\dfrac{\lambda^3}{2\pi c^2}\dfrac{d^2 n}{d\lambda^2}$ and $n(\lambda)$ is the wavelength dependent refractive index (Sellmeier equation) of the optical medium).

For $\lambda$ = 0.8 $\mu$m, the following materials have $k_2$-values as follows: LiF: 566 fs$^2$/cm, water: 667 fs$^2$/cm, BK7: 1236 fs$^2$/cm, YAG: 2803 fs$^2$/cm, CS$_2$: 6091 fs$^2$/cm and air: 0.59 fs$^2$/cm. In general, $k_2$ is considerably higher at shorter wavelengths, e. g. $k_2$(YAG): 2 * $10^5$ fs$^2$/cm at 0.3 $\mu$m.

According to equation (1), the evolution of pulse duration t (z) depends on the initial pulse duration to, the chirp C, and the material parameter k$_2$. The pulse lengthening after propagation of 2 cm in water is a factor of 20.9 for an initial pulse duration of 8 fs and a factor of 1.3 for a 40 fs pulse, assuming $\lambda$ = 0.8 $\mu$m and C = 0. For the latter pulse and C = 1 the lengthening factor would be 2.0. Negatively chirped pulses initially become shorter (pulse compression) up to a distance

$$z_{min} = \frac{-c}{1+c^2}\frac{t_0^2}{k_2}$$

($z_{min}$ = 0.048 cm for C = -1 and $t_0$ = 8 fs). At this position, the transform-limited pulse duration is reached ($t(z_{min}) = t_p$), hence, the 8 fs pulse is shortened to $8/\sqrt{2}$ fs. Beyond $z_{min}$, the pulses are lengthening according to a C = 0 characteristic.

The radial and temporal shape of a normalized Gaussian pulse at a distance z is given by

$$I(r,t,z) = \left(\frac{E}{\pi r_0^2}\right)\sqrt{\frac{16\,ln(2)}{\pi}}\frac{cos^2(\omega t)}{t_z}exp\left[-4\,ln(2)\frac{t^2}{t_z^2} - \frac{r^2}{r_0^2}\right] \qquad\qquad (2)$$

where $E$ is the laser pulse energy and $r_0$ is the radius of the beam (at 1/e intensity level).

The laser fluence for a Gaussian beam can be expressed in a more general form $S(r)$ -> $S(x,y)$ with

$$\int_x \int_y S(x,y)\,dxdy = E$$ provided that all rays propagate parallel to each other, or, $S(x,y)$ does not depend on z.

Now, if an absorbing component exhibiting a non-linear interaction with the laser pulse, e.g. a two-photon absorbing dye at a low concentration is dissolved in or arranged adjacent to the dispersive medium, it acts as a spectator of the local intensity. The time-integrated fluorescence signal is then given by:

$$F(x,y,z) = R\frac{\sigma^2 S(x,y)^2 t_0(x,y)}{t_z(x,y)} \quad ;$$

$$t_z(x,y) = t_0(x,y)\sqrt{\left(1 + C(x,y)\frac{zk_2}{t_0^2(x,y)}\right)^2 + \left(\frac{zk_2}{t_0^2(x,y)}\right)^2} \qquad (3)$$

where $\sigma^{(2)}$ [$cm^4 \cdot s$] is the two photon absorption cross-section of the absorbing component (e. g. dye) and $k_2$ is the second order of dispersion of the solvent medium. Due to the dependency on the pulse duration, this expression represents an essential aspect of the present invention. It is to be noted that the result of a linear excitation process would not depend on the pulse duration. The pre-factor $R$ subsumes the proportional constant such as a dye concentration, a viewing angle, a detection efficiency or the like. The signal $F$ can be sensed, in particular measured with an optical sensor device, like e.g. a camera. Because the above material parameters $\sigma^{(2)}$ and $k_2$ are known (or measurable), the spatial distribution of the laser fluence $S(x,y)$, the initial pulse duration $t_0(x,y)$ and the chirp $C(x,y)$ can be derived from at least one measured signal $F$ with a straightforward fit-routine. In particular, the $1/t_z$ proportionality of the signal (3) can be used for determining the local pulse duration. The $x$-$y$ plane is transverse to the propagation axis z. This analysis can easily be generalized to other arbitrary temporal profiles, e.g. by a superposition of Gaussian profiles.

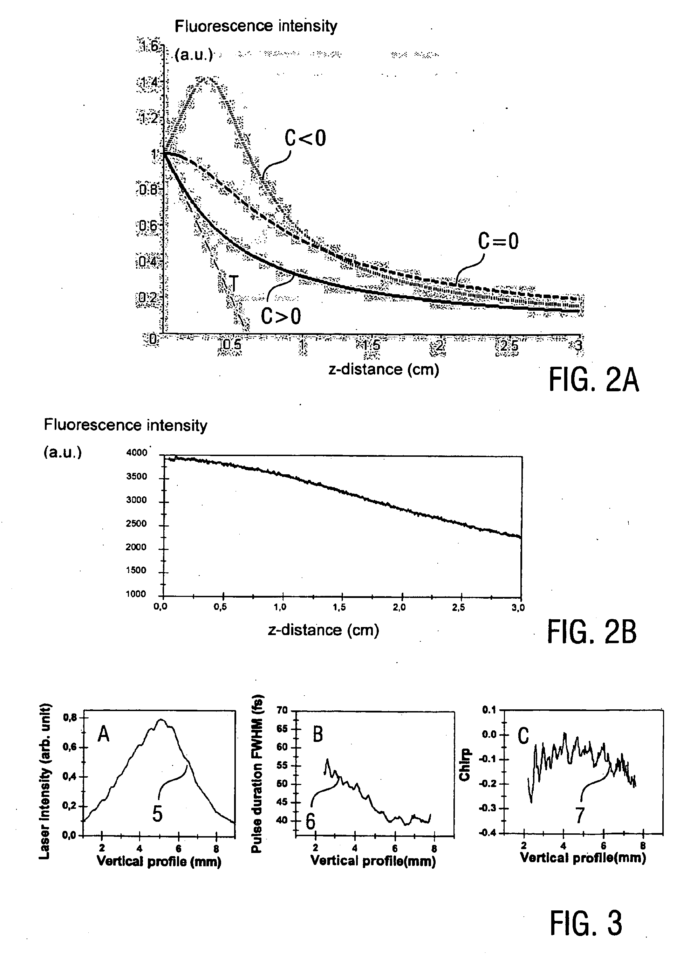

For the simplest case, when the laser pulse can be characterized by a single pair of ($t_0$,C) and neglecting possible lateral variations, fluorescence traces can be recorded as shown in Figure 2A (see below).

Using this technique, the inventors have provided a tool for the spatial and temporal beam characterization applicable for pulse lengths of preferably below femtoseconds (fs) up to about one picosecond (ps). The accessible wavelength range depends on non-linear interaction used, in particular the two-photon absorption spectra of the fluorescing materials. For dye molecules the wavelength spans from the visible up to the near-infrared. Maximum laser intensities should be below 100 GW/cm$^2$ in order to avoid saturation and nonlinear propagation effects.

If the fluorescence quantum yield of the absorbing component, e.g. the dye in the dispersive medium is known, even an absolute measurement of the pulse energy is possible. After a calibration of the set-up (i.e. determination of the pre-factor $R$), a reference-free absolute measurement of the local pulse intensity (energy/pulse duration) can be provided.

By means of fluorescence excitation, the laser pulse can be visualized either along the direction of propagation or perpendicular to it. Fluorescence excited via a non-linear excitation process contains the pulse duration as a determining parameter. When propagating through a dispersive medium, the pulse duration changes in a characteristic manner, which depends on the pulse duration and the chirp of the impinging pulse. Hence, imaging the beam from the side as it propagates through a dispersive medium or imaging the beam profile after it has propagated through the dispersive medium of variable thickness (or k$_2$) provides a two-dimensional beam diagnostic.

Embodiments of the invention

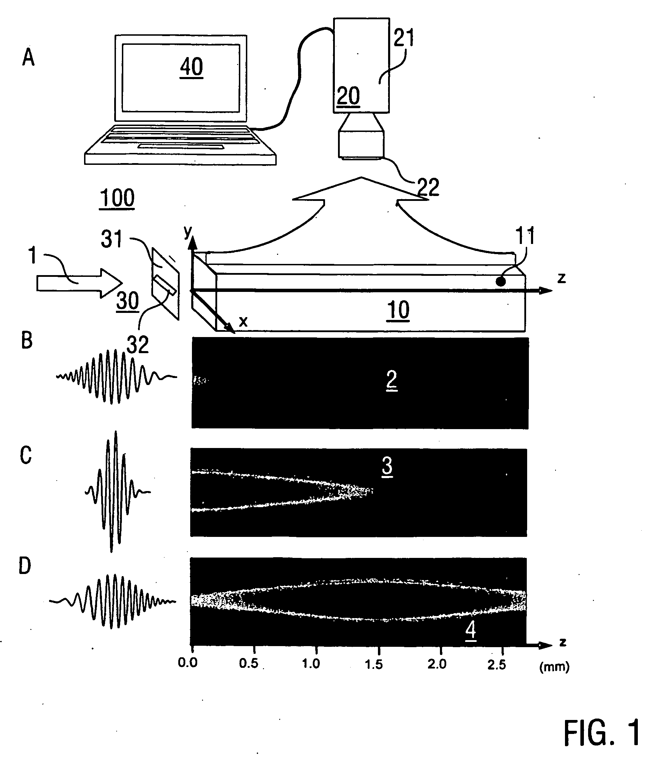

Figure 1A illustrates a first embodiment of a measuring device 100 according to the invention. The measuring device 100 comprises a dispersive medium 10, an optical sensor device 20, a masking device 30 and an analysing device 40. Laser pulses 1 to be investigated are generated with a laser source (not shown) and irradiated along a predetermined propagation direction (z-direction) through the masking device 30 onto the dispersive medium 10. Preferably, the laser pulses propagate as a parallel laser beam.

The dispersive medium 10 comprises e.g. a liquid solution of an absorbing component 11, like a dissolved dye, e.g. Rhodamine B dissolved in water. The Rhodamine B concentration is e.g. $2.4 \cdot 10^{17}$ molecules/cm$^3$. The dye solution is accommodated in a glass cuvette longitudinally extending in the z-direction. The dimensions of the cuvette in x-, y- and z-directions can be selected in a flexible way in dependence on the particular application. They comprise for example: 2 cm , 2 cm and 3 cm, resp..

The optical sensor device 20 comprises a CCD camera 21 and a band pass filter 22. The CCD camera 21 (e.g. "SensiCam", PCO. imaging) is adapted for imaging a fluorescence pattern induced in the dispersive medium 10. The CCD camera 21 has a viewing direction perpendicularly to the pulse propagation axis (z-direction). The band-pass filter 22 (e.g. 560 $\pm$ 25 nm, Semrock) is placed in front of the CCD camera 21 for blocking scattered light from the laser pulse and passing fluorescence light only.

The masking device 30 comprises a screen 31 with a slit 32 being arranged on the input side (illuminated side) of the dispersive medium 10. The opaque screen 31 is made of e.g. paper. The dimensions of the slit 32 are selected as follows. The length of the slit 32 essentially corresponds to the width of the dispersive medium (x-direction). The width of the slit 32 is adjusted such that a diffraction of the laser light is negligible. As an example, the slit width is selected to be about 1/10 of the beam diameter of the laser pulses, e. g. 1 mm.

The masking device 30 is used for transmitting only a predetermined longitudinal fraction of the laser pulses 1 to the dispersive medium 10. Accordingly, each slice of the beam profile can be individually characterized. Preferably, the slit 32 represents a variable transmission opening being movable in the direction perpendicular to the longitudinal extension of the slit and perpendicular to the propagation direction of the laser pulses 1, i.e. in the y-direction. Accordingly, a plurality of different longitudinal sections of the laser pulses 1 can be investigated.

The analysing device 40 is connected with the optical sensor device 20 for evaluating pulse intensity distributions in the dispersive medium 10 being collected with the CCD Camera 21. Furthermore, the analysing device optionally can be connected with the masking device 30 having a variable slit 32 and/or further components of the optical set up for generating the laser pulses 1 (not shown). The analysing device 40 comprises e.g. a computer being provided with input and display means for controlling and monitoring the operation of the measuring device 100.

The method of laser pulse characterisation of the invention, in particular for measuring the pulse duration and the pulse chirp, follows the following procedure. The laser pulses 1 are generated e.g. with a Ti:sapphire chirped pulse amplification (CPA) laser system, which generates fs laser pulses with a central wavelength at 807 nm and a spectral width of 28 nm, a repetition rate of 1 kHz and an energy per pulse of 50 $\mu$J. The pulse duration is 48 $\pm$ 5 fs (measured with a scanning auto-correlator). The typical laser intensity is below 100 GW/cm$^2$ so that an intensity saturation of the dye is avoided.

Launching the laser pulses 1 through the dispersive medium 10 yields pulse intensity distributions 2, 3 and 4, which are schematically illustrated in Figures 1B to 1D, resp.. These Figures represent schematic images of pulse intensity distributions as they can be measured with the optical set up of Figure 1A. For printing reasons, false colours representing different intensities are shown with a grey scale only. The illustrated pulse intensity distributions 2, 3 and 4 represent fluorescence signals being obtained with two photon excitation of the dye and being collected with the CCD camera 21. The signals differ from each other depending on the chirp C of the initial laser pulses 1.

The development of the two-photon fluorescence signal along the propagation axis z is directly related to the initial characteristics of the pulses. The longitudinal distribution of the fluorescence decreases monotonically if the initial chirp is positive (Figure 1B) or zero (Figure 1C). For negatively chirped laser pulses the fluorescence signal first increases and reaches a maximum at the position $z = \dfrac{-C}{1+C^2}\left(\dfrac{t_0^2}{k_2}\right)$ (see Figure 1D), from whereon it decreases according to the transform-limited pulse duration. The shorter is the initial pulse duration, the more pronounced is the fluorescence decay. In fact, an eye inspection of the fluorescence pattern already provides an approximated estimate of the laser pulse parameters. In case of composite laser pulses, a sum of Gaussian pulses with different initial parameters (fluence, pulse duration and chirp) is used for fitting the fluorescence signal.

Figure 2A illustrates the results of a numerical simulation of fluorescence traces, which can be measured with the optical set-up of Figure 1A. According to the above equation (3), the fluorescence traces can be directly analyzed for obtaining the parameters pulse duration and chirp. The examples are calculated with a pulse duration $t_0$ = 20 fs and $k_2$ = 667 fs$^2$/cm for positive chirp (C > 0, Figure 1B, solid curve in Figure 2A), the pulse duration $t_0$ and the chirp C can be obtain from the following equations:

$$z_0 = \frac{t_0^2}{Ck_2} \quad \text{and} \quad z_{1/2} = \frac{C - \sqrt{4C^2+3}}{C^2+1}\frac{t_0^2}{k_2}$$

wherein $z_0$ represents the intersection of the tangent line T of the solid curve with the abscissa and $z_{1/2}$ represents the distance where the signal has dropped to 1/2 of its initial value.

For zero chirp (C = 0, Figure 1C, dashed curve in Figure 2A), the pulse duration can be calculated on the basis of

$$z_{1/2} = \frac{\sqrt{3}}{k_2} t_p^2$$

For negative chirp (C < 0, Figure 1D, dotted curve in Figure 2A), the above parameters are calculated on the basis of:

$$z_{min} = \frac{C}{C^2+1}\frac{t_0^2}{k_2} \quad \text{and} \quad F_{max} = \sqrt{1+C^2}$$

Accordingly, the pulse parameters pulse duration and chirp can be directly obtained from fitting the measured fluorescence traces.

As an example, the measured and fitted side fluorescence data induced by the propagating laser pulses 1 are shown in Figure 2B. The laser pulses 1 as illustrated in Figure 1B, induce a longitudinal distribution of the fluorescence intensity measured at the centre of the beam as shown in Figure 2B. Fitting the measured longitudinal distribution of the fluorescence yields a slight negative chirp C = - 0.03 and a pulse duration of 46.7 fs.

By shifting the slit 32 of the masking device 30 (Figure 1A), different longitudinal sections of the laser pulse 1 can be measured. Accordingly, it is possible to extract information even on the radial distribution of the laser intensity from longitudinal distributions measured according to Figure 1. After calibration of the optical system, the full information of the laser pulse without pre-knowledge can be retrieved.

Examples of vertical or traverse pulse intensity distributions 5, 6, 7 are illustrated in Figure 3A to 3C, which show the parameters laser intensity, pulse duration and chirp obtained by fitting equation (3) as a function of the vertical profile of the laser beam measured with the set up of Figure 1A. Figure 3A confirms that the radial distribution of the laser intensity is close to a Gaussian distribution. However, Figure 3B and 3C show that the pulse duration and the chirp are not radially uniform. Such information on the spatial variation of the pulse duration and chirp are not available with conventional techniques. Corresponding measurements obtained with standard autocorrelation techniques correspond only to the locally averaged pulse duration.

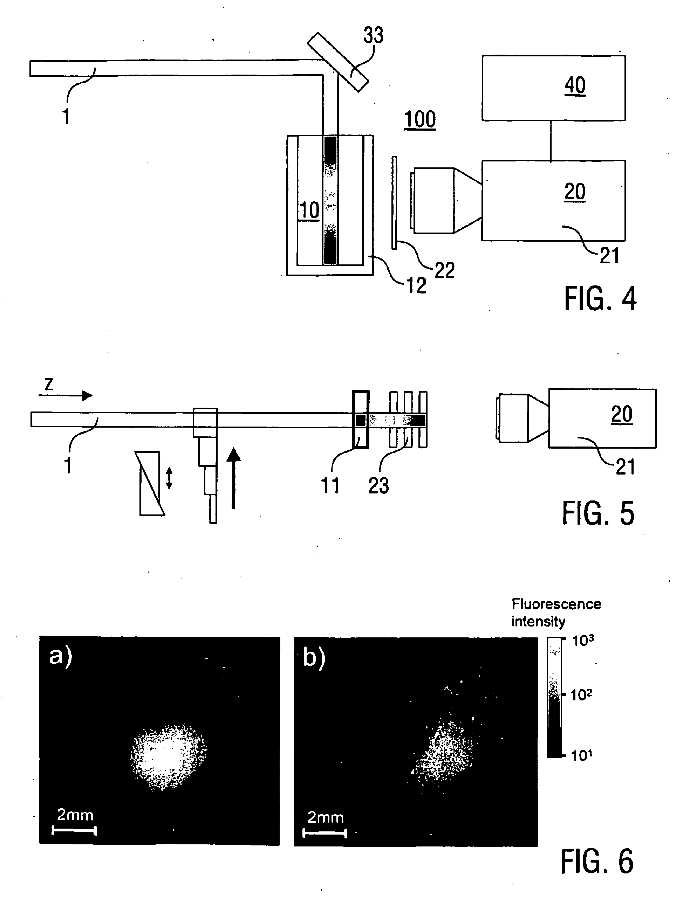

A second embodiment of the measuring device 100 according to the invention is illustrated in Figure 4. The measuring device 100 comprises the dispersive medium 10 accommodated in a glass cuvette 12, the optical sensor device 20 with the CCD camera 21 and the filter 22 and the analysing device 40. Details of these components are provided as it has been described with reference to Figure 1A. A difference compared with Figure 1A is given by the vertical propagation direction of the laser pulses set with the mirror 33. Accordingly, the laser pulses 1 can be irradiated directly into the liquid dispersive medium 10 without passing through a glass interface. Experimental results obtained with the device of Figure 4 correspond to the results described above.

Figure 5 illustrates a further technique (no embodiment of the invention) being particularly adapted for measuring a plurality of traverse pulse intensity distributions representing different cross-sections of the laser pulses 1. For this purpose, the measuring device 100 comprises the dispersive medium 10 and the absorbing component 11 being arranged separately from each other. Furthermore, the optical sensor device 20 comprises a CCD camera 21 having a viewing direction parallel to the propagation direction of the laser pulses 1 (z-direction). For blocking the intensive laser light, additional filters 23 are arranged between the absorbing component 11 and the CCD camera 21.

According to Figure 5, the dispersive medium 10 does not include a substance having a non-linear interaction with the laser pulses 1. The dispersive medium 10 comprises e.g. glass or another dispersing material. The dispersive medium 10 is adapted for providing a varying optical path length in z-direction. For this purpose, the dispersive medium 10 has a step-shape as illustrated. The thickness of the different steps of the dispersive medium 10 are selected in the range of 0.1 mm to 1 cm for providing various dispersion lengths. Alternatively, the optical path length can be set with a plurality of layer-shaped dispersive elements, the number of which being selected for providing a predetermined optical path length. According to a further alternative, two prisms can be combined as illustrated in the insert of Figure 5. This technique has advantages in terms of a continuous variation of the optical path length, while any deflection of the laser beam can be avoided. The absorbing component 11 comprises a thin-layer cuvette including a dye solution. The cuvette provides a dye solution thickness of about 50 $\mu$m. Alternatively, another kind of non-linear responding medium, such as a gas or a metal film can be utilized.

With the measuring device 100 according to Figure 5 beam profiles of the laser pulses can be directly measured for individual pulse lengths contributions. If the dispersive medium 10 provides a short optical pulse length (e.g. 0.1 mm), the image obtained with the CCD camera 21 is essentially formed by short duration contributions of the laser pulses in the fs-range, while with a larger optical path length of the dispersive medium 10, contributions of the laser pulses on a longer time scale are effective ( $F(x,y,z) \sim \dfrac{E^2}{t_{z_i}}$ ) ($t_{z_i}$ represent different thicknesses of the dispersive medium).

This difference illustrated in Figure 6, which shows in Figure 6A the profile of a 7 fs pulse, while Figure 6B illustrates the spatial profile of a 60 fs-contribution contained in the short pulses. This spatial profile shows an asymmetric ring structure, which does not occur in the 7 fs-contribution. To retrieve the spatial distribution of the pulse duration, chirp and/or fluence of the laser pulses, the fluorescence distribution as a function of the dispersive medium thickness at given parameter $k_2$ is fitted with equation 3 for each pixel across the vertical laser beam profile.

The implementation of the invention is not limited to the use of a Ti-sapphire laser system for generating fs pulses, but rather possible also with e.g. fibre lasers, semiconductor lasers, dye lasers, gas lasers, solid-state lasers, amplification systems, optical parametric amplification systems or combination thereof.

Although the present invention is exemplified for pulses from a Ti:Sapphire laser, it is clearly not limited to this specific laser type. In particular, it is especially adequate for very short pulses. The necessary optical path length for reducing the initial fluorescence signal to a value of a < 1 is $z_a = \sqrt{\dfrac{1}{a^2} - 1} \dfrac{t_p^2}{k_2}$ ($z_a$: about 12 cm for $t_p$ = 0.5 ps and

$k_2$ = $10^4$ fs$^2$/cm). Accordingly, even when folded beam paths are applied, pulses longer than about 1 ps are less practicable in terms of a compact optical set-up. Moreover, short pulses are connected with high intensities, which favor non-linear fluorescence excitation.

The potential frequency range is only limited by the transparency of the dispersive medium, so that 0.15 $\mu$m - pulses (photon energy: about 8.3 eV) are principally accessible. However, these pulses have to induce a two-photon-excitation process at about 16.6 eV, which requires VUV detectors. Furthermore, the two-photon-signal has to be strong enough so that possible one-photon-signal-contributions are tolerable. Limitations in the infrared region are determined by the availability of adequate detectors as well as suitable two-photon absorbers. A combination of a GaAs detector with an IR absorbing dye would enable measurements up to about 2 $\mu$m. Higher order excitation processes can be applied for further extending the infrared region.

## Claims

1.   Method of laser pulse characterization, comprising the steps of:

> - propagating at least one laser pulse (1) having a duration below 1 ps as a single shot through a dispersive medium (10), and
> - sensing at least one spatial pulse intensity distribution (2, 3, 4) formed by a non-linear interaction of the at least one laser pulse (1) with an absorbing component (11), which is included in the dispersive medium (10), wherein the sensing step comprises measuring at least one side pulse intensity distribution (2, 3, 4) along the propagating direction (z) of the at least one laser pulse (1),
> **characterized by the step** of
> - operating a masking device (30) having a variable transmission opening (32) for selectively transmitting different longitudinal sections of a pulse profile to the dispersive medium,
> - determining at least one of a pulse duration and a chirp parameter of the at least one laser pulse (1) by analyzing the at least one spatial pulse intensity distribution (2 - 7).

2.  Method according to claim 1, wherein the sensing step comprises:

    - measuring a plurality of side pulse intensity distributions (2, 3, 4) representing different longitudinal sections of the at least one laser pulse (1).

3.  Method according to at least one of the foregoing claims, wherein the at least one pulse parameter further comprises a pulse profile and/or a fluence of the laser pulse.

4.  Method according to at least one of the foregoing claims, wherein at least one of a gas, a liquid or a solid of is used as the dispersive medium.

5.  Method according to at least one of the foregoing claims, wherein at least one of a chromophoric substance, a doped crystal, a gas, a semiconductor and a metal is used as the absorbing component.

6.  Method according to at least one of the foregoing claims, wherein the step of sensing the at least one pulse intensity distribution (2 - 7) comprises an optical detection or an electrical photocurrent detection.

7.  Method according to claim 6, wherein the optical detection comprises detecting a one- or two-dimensional two-photon excitation fluorescence image.

8.  Measuring device (100) for laser pulse characterization, comprising:

    - a dispersive medium (10) providing a beam path with a predetermined propagation direction (z) for at least one laser pulse (1),
    - an absorbing component (11), which is included in the dispersive medium (10) and which is being capable for a non-linear interaction with the laser pulse (1), and
    - a sensor device (20) for sensing at least one spatial pulse intensity distribution (2 - 7) formed by the non-linear interaction of the laser pulse (1) as a single shot with the absorbing component,
    **characterized by**
    - an analyzing device (40) for determining at least one of a pulse duration and a chirp parameter of the at least one laser pulse (1) by analyzing the at least one spatial pulse intensity distribution (2 - 7), and
    - a masking device (30) having a variable transmission opening (32) for selectively transmitting different longitudinal sections of a pulse profile to the dispersive medium (10).

9.  Measuring device according to claim 8, wherein the sensor device comprises an optical sensor device (20) or an electrical photocurrent sensor device.

10. Measuring device according to claim 9, wherein the optical sensor device (20) is arranged laterally relative to the propagation direction (z) of the laser pulse (1).


**Patentansprüche**

1.  Verfahren zur Laserpuls-Charakterisierung, umfassend die Schritte:

    - Ausbreiten von mindestens einem Laserpuls (1), der eine Dauer kleiner als 1 ps aufweist als Einzelfluss durch ein dispersives Medium (10), und
    - Erfassen von mindestens einer räumlichen Pulsintensitätsverteilung (2, 3, 4), die durch eine nicht lineare Wechselwirkung des mindestens einen Laserpulses (1) mit einer absorbierenden Komponente (11) gebildet wird, die in dem dispersiven Medium (10) enthalten ist, wobei der Schritt des Erfassens ein Messen von mindestens einer Seiten-Pulsintensitätsverteilung (2, 3, 4) entlang der Ausbreitungsrichtung (z) von den mindestens einem diesen Puls (1) umfasst,
    **gekennzeichnet durch die Schritte**
    - Betätigen einer Maskierungseinrichtung (30), die eine variable Transmissionsöffnung (32) aufweist, um selektiv verschiedene longitudinale Abschnitte eines Pulsprofils zu dem dispersiven Medium zu übertragen,
    - Bestimmen von mindestens einem von einer Pulsdauer und einem Chirp-Parameter von dem mindestens einen Laserpuls (1) durch Analysieren der mindestens einen ordentlichen Pulsintensitätsverteilung (2-7).

2. Verfahren gemäß Anspruch 1, wobei der Schritt des Erfassens umfasst:

- Messen einer Vielzahl von Seiten-Pulsintensitätsverteilungen (2, 3, 4), welche verschiedene longitudinale Abschnitte des mindestens einen Laserpulses (1) repräsentieren.

3. Verfahren gemäß mindestens einem der vorhergehenden Ansprüche, wobei der mindestens eine Pulsparameter ferner ein Pulsprofil und/oder eine Fluenz des Laserpulses umfasst.

4. Verfahren gemäß mindestens einem der vorhergehenden Ansprüche, wobei mindestens eines von einem Gas, einer Flüssigkeit und einem Festkörper als dispersives Medium verwendet wird.

5. Verfahren gemäß mindestens einem der vorhergehenden Ansprüche, wobei mindestens eines von einer chromophoren Substanz, einem dotierten Kristall, einem Gas, einem Halbleiter und einem Metall als die absorbierende Komponente verwendet wird.

6. Verfahren gemäß mindestens einem der vorhergehenden Ansprüche, wobei der Schritt des Erfassens der mindestens einen Pulsintensitätsverteilung (2-7) eine optische Detektion oder eine Detektion eines elektrischen Fotostroms umfasst.

7. Verfahren gemäß Anspruch 6, wobei die optische Detektion ein Detektieren eines ein- oder zwei-dimensionalen Zwei-Photonen-Anregungs-Fluoreszenzbildes umfasst.

8. Messeinrichtung (100) zur Laserpuls-Charakterisierung, umfassend:

- ein dispersives Medium (10), das einen Strahlweg mit einer vorbestimmten Ausbreitungsrichtung (z) für mindestens einen Laserpuls (1) bereitstellt,
- ein absorbierendes Medium (11), das in dem dispersiven Medium (10) enthalten ist und das für eine nicht lineare Wechselwirkung mit dem Laserpuls (1) geeignet ist, und
- eine Sensoreinrichtung (20) zum Erfassen von mindestens einer räumlichen Pulsintensitätsverteilung (2-7), die durch die nicht lineare Wechselwirkung des Laserpulses (1) als ein Einzelfluss dem absorbierenden Medium gebildet wird,
**gekennzeichnet durch**
- eine Analyseeinrichtung (40) zum Bestimmen von mindestens einem von einer Pulsdauer und einem Chirp-Parameter von dem mindestens einen Laserpuls (1) **durch** Analysieren der mindestens einen räumlichen Pulsintensitätsverteilung (2-7) und
- eine Maskierungseinrichtung (30) die eine veränderliche Transmissionsöffnung (32) zum selektiven Übertragen von verschiedenen longitudinalen Abschnitten eines Pulsprofils zu dem dispersiven Medium (10) aufweist.

9. Messeinrichtung gemäß Anspruch 8, wobei die Sensoreinrichtung eine optische Sensoreinrichtung (20) oder eine Sensoreinrichtung für einen elektrischen Fotostrom umfasst.

10. Messeinrichtung gemäß Anspruch 9, wobei die optische Sensoreinrichtung (20) lateral relativ zu der Ausbreitungsrichtung (z) des Laserpulses (1) angeordnet ist.

**Revendications**

1. Procédé de caractérisation d'impulsion laser, comprenant les étapes consistant à :

- propager au moins une impulsion laser (1) ayant une durée inférieure à 1 ps en tant que décharge unique à travers un milieu dispersif (10), et
- détecter au moins une distribution d'intensité d'impulsion spatiale (2, 3, 4) formée par une interaction non linéaire de ladite au moins une impulsion laser (1) avec un composant absorbant (11), qui est inclus dans le milieu dispersif (10), dans lequel l'étape de détection comprend la mesure d'au moins une distribution d'intensité d'impulsion latérale (2, 3, 4) le long de la direction de propagation (z) de ladite au moins une impulsion laser (1), **caractérisé par** les étapes consistant à

- mettre en oeuvre un dispositif de masquage (30) comportant une ouverture de transmission variable pour transmettre de manière sélective différentes sections longitudinales d'un profil d'impulsion au milieu dispersif,
- déterminer au moins l'un d'une durée d'impulsion et d'un paramètre de compression d'impulsion de ladite au moins une impulsion laser (1) en analysant ladite au moins une distribution d'intensité d'impulsion spatiale (2 à 7).

2. Procédé selon la revendication 1, dans lequel l'étape de détection consiste à :

- mesurer une pluralité de distributions d'intensité d'impulsion latérales (2, 3, 4) représentant différentes sections longitudinales de ladite au moins une impulsion laser (1).

3. Procédé selon au moins l'une des revendications précédentes, dans lequel ledit au moins un paramètre d'impulsion comprend en outre un profil d'impulsion et/ou une fluence de l'impulsion laser.

4. Procédé selon au moins l'une des revendications précédentes, dans lequel au moins l'un d'un gaz, d'un liquide ou d'un solide est utilisé en tant que milieu dispersif.

5. Procédé selon au moins l'une des revendications précédentes, dans lequel au moins l'un d'une substance chromophore, d'un cristal dopé, d'un gaz, d'un semi-conducteur et d'un métal est utilisé en tant que composant absorbant.

6. Procédé selon au moins l'une des revendications précédentes, dans lequel l'étape de détection de ladite au moins une distribution d'intensité d'impulsion (2 à 7) comprend une détection optique ou une détection de courant photoélectrique.

7. Procédé selon la revendication 6, dans lequel la détection optique comprend la détection d'une image de fluorescence par excitation à deux photons bidimensionnelle.

8. Dispositif de mesure (100) de caractérisation d'impulsion laser, comprenant :

- un milieu dispersif (10) réalisant un trajet de faisceau avec une direction de propagation prédéterminée (z) pour au moins une impulsion laser (1),
- un composant absorbant (11), qui est inclus dans le milieu dispersif (10) et qui est capable d'interagir non linéairement avec l'impulsion laser (1), et
- un dispositif de détection (20) pour détecter au moins une distribution d'intensité d'impulsion spatiale (2 à 7) formée par l'interaction non linéaire de l'impulsion laser (1) en tant que décharge unique avec le composant absorbant,
**caractérisé par**
- un dispositif d'analyse (40) pour déterminer au moins l'un d'une durée d'impulsion et d'un paramètre de compression d'impulsion de ladite au moins une impulsion laser (1) en analysant ladite au moins une distribution d'intensité d'impulsion spatiale (2 à 7), et
- un dispositif de masquage (30) comportant une ouverture de transmission variable (32) pour transmettre de manière sélective différentes sections longitudinales d'un profil d'impulsion au milieu dispersif (10).

9. Dispositif de mesure selon la revendication 8, dans lequel le dispositif de détection comprend un dispositif de détection optique (20) ou un dispositif de détection de courant photoélectrique.

10. Dispositif de mesure selon la revendication 9, dans lequel le dispositif de détection optique (20) est agencé latéralement par rapport à la direction de propagation (z) de l'impulsion laser (1).

FIG. 1

FIG. 2A

FIG. 2B

FIG. 3

FIG. 4

FIG. 5

Fluorescence intensity

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. Kane et al.** Single-shot measurement of the intensity and phase of a femtosecond laser pulse. *Proc. SPIE,* 1993, vol. 150, 1861
- **P. O'Shea et al.** Highly simplified device for ultrashort-pulse measurement. *Opt. Lett.,* 2001, vol. 26, 932-934
- **C. Iaconis et al.** Spectral phase interferometry for direct electric-field reconstruction of ultrashort optical pulse. *Opt. Lett.,* 1998, vol. 23, 792-794
- **D. J. Bradley et al.** *Proc. of the IEEE,* 1974, vol. 62 (3), 313
- **O. Lammel et al.** *Optical and Quantum Electronics,* 2000, vol. 32, 1147
- **W. Liu et al.** *Optics Communications,* 2003, vol. 225, 193